Europäisches Patentamt

European Patent Office

Office européen des brevets

(19)

(11) Veröffentlichungsnummer: **0 309 667 B1**

(12) **EUROPÄISCHE PATENTSCHRIFT**

(45) Veröffentlichungstag der Patentschrift: **17.02.93**

(51) Int. Cl.⁵: **G06F 12/12**

(21) Anmeldenummer: **88111354.2**

(22) Anmeldetag: **14.07.88**

(54) Schaltungsanordnung, für Datenverarbeitungssysteme, zur Realisierung eines modularorganisierten, erweiterbaren LRU (Least Recently Used)-Mechanismus für n Elemente.

(30) Priorität: **30.09.87 DE 3733069**

(43) Veröffentlichungstag der Anmeldung:
**05.04.89 Patentblatt 89/14**

(45) Bekanntmachung des Hinweises auf die
Patenterteilung:
**17.02.93 Patentblatt 93/07**

(84) Benannte Vertragsstaaten:
**AT BE CH DE FR GB IT LI LU NL SE**

(56) Entgegenhaltungen:
**EP-A- 0 234 038**
**DE-A- 3 429 571**
**US-A- 4 195 343**

(73) Patentinhaber: **SIEMENS AKTIENGESELL-
SCHAFT**
**Wittelsbacherplatz 2**
**W-8000 München 2(DE)**

(72) Erfinder: **Breintner, Richard, Dipl.-Ing.**
**Mobil-Oil-Strasse 47**
**W-8261 Ampfing(DE)**
Erfinder: **Wahr, Alfons, Dipl.-Inf.**
**Pucher Strasse 52**
**W-8080 Fürstenfeldbruck(DE)**

**Beschreibung**

Die vorliegende Erfindung bezieht sich auf eine Schaltungsanordnung für Datenverarbeitungssysteme, zur Realisierung eines modular organisierten, erweiterbaren LRU (Least Recently Used)-Mechanismus für n Elemente, beispielsweise Arbeitsspeicherseiten, Zellen von Assoziativspeichern usw. in einem Datenverarbeitungssystem, wobei $n \geq 2$ ist.

Ein mit einer derartigen Schaltungsanordnung durchzuführendes Betriebsverfahren dient zum Ermitteln desjenigen Elements, das am längsten nicht mehr benutzt wurde. Es ist sinnvoll anzuwenden, wenn es sich um eine kleine begrenzte Anzahl von Elementen handelt. Solche Elemente sind beispielsweise

- Arbeitsspeicher-Seiten (auch Kacheln genannt) in Datenverarbeitungsanlagen mit Page-Mechanismus,
- Zellen von Assoziativspeichern,
- Zellen, Puffer, Geräte bei Betriebssystemen, Prozeßsteuerungen usw.

Bisher werden derartige Benutzungsüberwachungen durch Software, Firmware, durch Zählerfelder mit Komparatoren, Zustandsautomaten, durchgeführt.

Der vorliegenden Erfindung liegt die Aufgabe zugrunde, eine Schaltungsanordnung der eingangs genannten Art zu schaffen, die auf einfache, kostengünstige, raumsparende und zuverlässige, nämlich den Faktor "Überwachungsfehler durch Personal" ausschließende Art und Weise die eingangs genannte Funktion ausführen kann.

Die der Erfindung zugrundeliegende Aufgabe wird durch eine Schaltungsanordnung der eingangs genannten Art und gemäß dem Oberbegriff des Patentanspruchs 1 gelöst, die erfindungsgemäß durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren im einzelnen beschrieben:

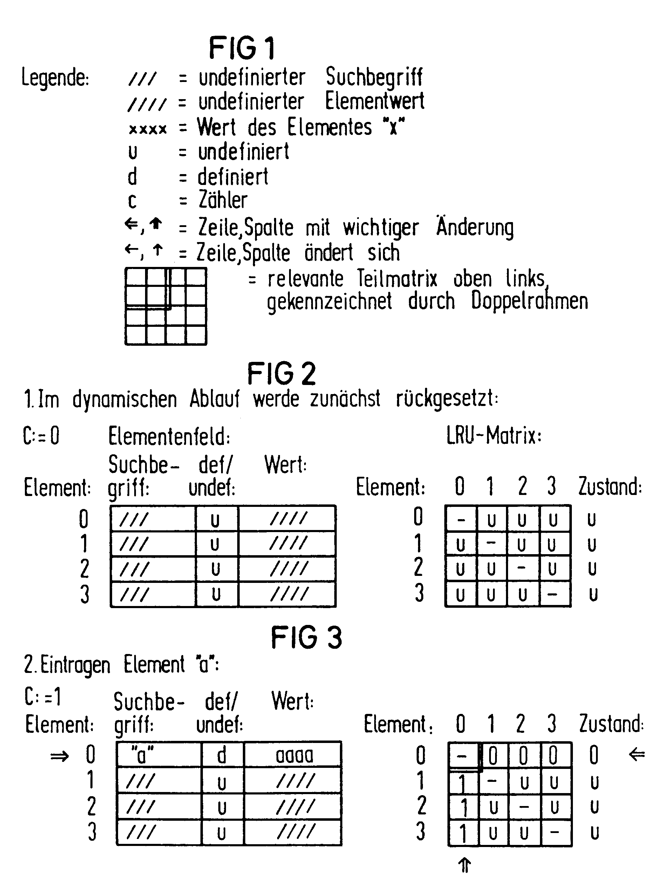

Fig. 1 zeigt schematisch eine relevante Teilmatrix mit n = 4, an deren Beispiel die verschiedenen Verhaltensschritte erläutert werden sollen.

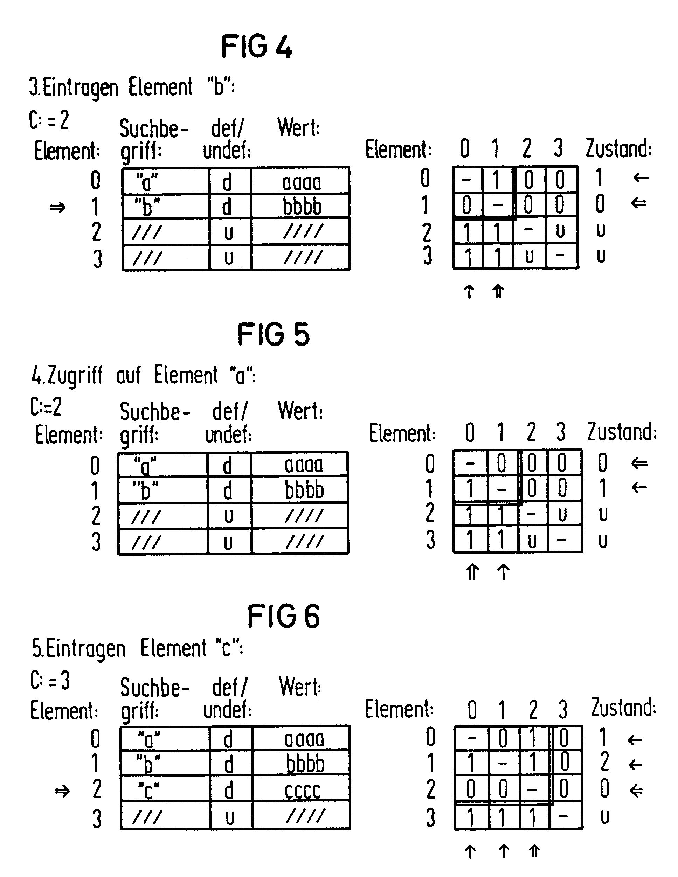

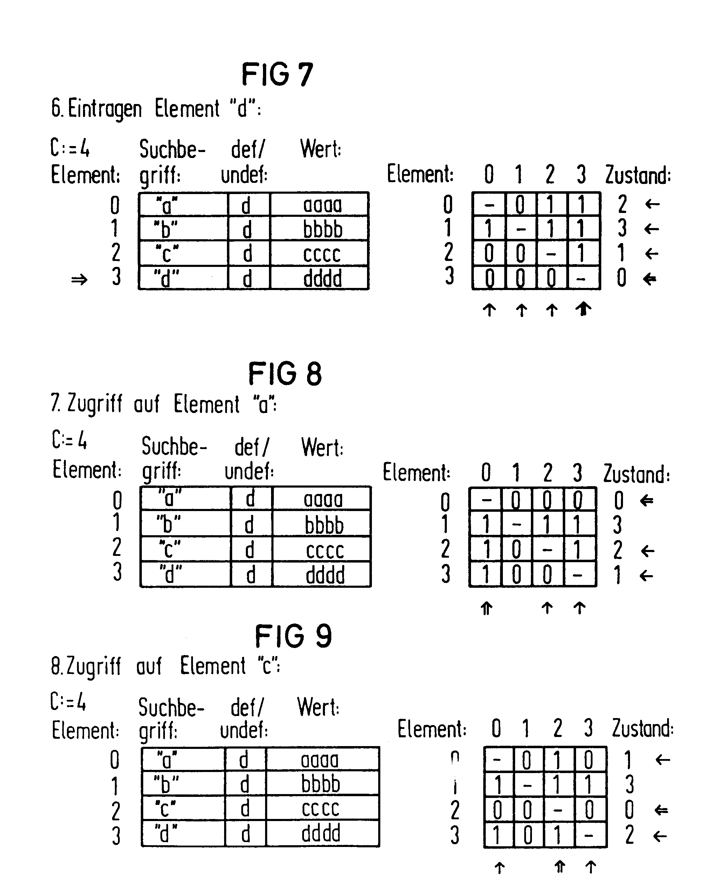

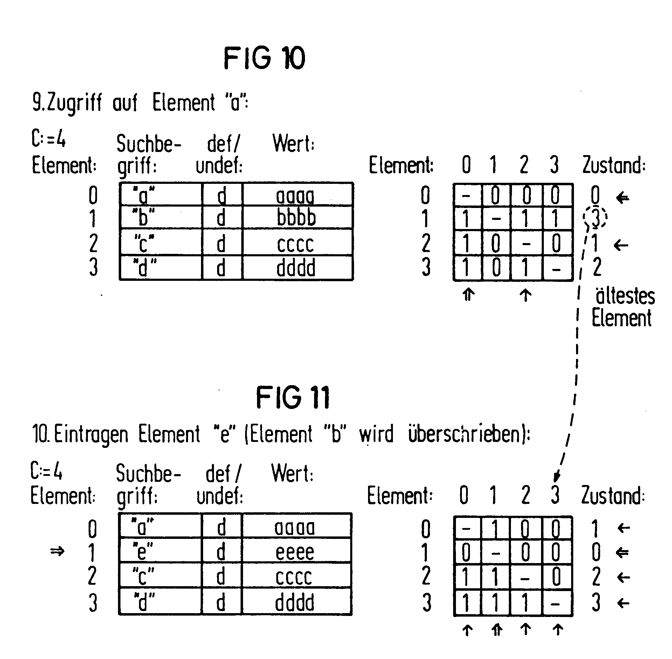

Fig. 2 bis Fig. 11 zeigen jeweils schematisch ein Elementenfeld und eine LRU-Matrix, mittels derer die verschiedenen Verfahrensschritte bzw. deren Auswirkungen erläutert werden.

Fig. 12 zeigt eine Schaltungsanordnung, aus der die Zusammenschaltung eines Elementenfeldes, einer LRU-Matrix sowie einer Steuerlogik hervorgeht.

Das mittels der erfindungsgemäßen Schaltungsanordnung durchzuführende Verfahren wird zunächst mathematisch, dann logisch erklärt. Eine Beschreibung eines Anwendungsbeispiels schließt sich daran an.

Algebraische Algorithmusbeschreibung

Gegeben seien n Elemente $E_0$, $E_1$,..., $E_{n-1}$ mit $n \in \text{IN}$ $n > 1$. Jedes Element $E_i$ mit $i \in \{0,...,n-1\}$ befinde sich zum Zeitpunkt t in einem Zustand $Z_i^t$ mit $Z_i^t \in \{\text{undef},0,...,n-1\}$, der Information über die Zugriffsreihenfolge zu diesem Element enthält. Mehrere Elemente dürfen den Zustand "undef" besitzen, d. h., daß sie undefiniert, also frei sind. Sind sie jedoch definiert, so ist die Zustands-Element-Beziehung bijektiv, d. h. daß jeder Zustandswert nur von genau einem Element belegt werden kann.

Algorithmus:

1. Fall = Elementzugriff (z. B. Seite im Arbeitsspeicher lesen/schreiben):

Wird auf das Element $E_j$ zugegriffen, so muß für alle Elemente der neue Zustand für den Zeitpunkt t + 1 berechnet werden.

$$z_i^{t+1} = \begin{cases} 0 & \text{für } i = j \\ z_i^t + 1 & \text{für } z_i^t < z_j^t \\ z_i^t & \text{für } z_i^t > z_j^t \\ \text{"undef"} & \text{für } z_i^t = \text{"undef"}, i \neq j \end{cases} \qquad \begin{array}{l} i,j \in \{0,\ldots,n-1\} \\ t \in \mathbb{Z} \end{array} \qquad (1)$$

2. Fall = Elementneubelegung bei Existenz undefinierter Elemente (z. B. eine freie Arbeitsspeicherseite neu belegen):
Solange es undefinierte Elemente gibt, sind diese zu belegen. Der Zustand berechnet sich dann nach

$$z_i^{t+1} = \begin{cases} 0 & \text{für } i = 1 \\ z_i^t + 1 & \text{für } z_i^t \neq \text{"undef"} \\ \text{"undef"} & \text{für } z_i^t = \text{"undef"}, i \neq j \end{cases} \qquad \begin{array}{l} i,j \in \{0,\ldots,n-1\} \\ t \in \mathbb{Z} \end{array} \qquad (2)$$

3. Fall = Elementneubelegung, wenn alle Elemente definiert sind; das am längsten nicht mehr benutzte wird überschrieben (z. B. auslagern der ältesten ASP-Seite und neubelegen dieser Seite):
Das gesuchte Element ist $E_k$ für das gilt

$$z_k^t = n - 1 \qquad (3)$$

Die neuen Zustände berechnen sich zu

$$z_i^{t+1} = \begin{cases} 0 & \text{für } i = k \\ z_i^t + 1 & \text{für } i \neq 1 \end{cases} \qquad (4)$$

Logische Implementierung durch eine Binärmatrix

Das Verfahren wird durch eine quadratische Binärmatrix der Ordnung n ohne Hauptdiagonale realisiert. Jedem Element wird eine Zeile zugeordnet. In jeder Zeile der Bool'schen Matrix ist für jedes Element je ein Spaltenelement, ein Bit vorhanden, ausgenommen für das eigene Element.

$$\text{Matrix } M = \begin{pmatrix} \vec{E}_0 \\ \vec{E}_1 \\ \cdot \\ \cdot \\ \cdot \\ \vec{E}_i \\ \cdot \\ \cdot \\ \cdot \\ \vec{E}_{n-1} \end{pmatrix}, \quad \vec{E}_i = (e_{i,0}, \ldots, e_{i,i-1}, -, e_{i,i+1}, \ldots, e_{i,n-1})$$

$$e_{i,j} \in \{0,1\}$$

$$i,j \in \{0,\ldots,n-1\}$$

$$(5)$$

Die Summe der Zeilenelemente entspricht dem Zustand des Elements $E_i$ zum Zeitpunkt t:

$$z_i^t = \sum_{\substack{j=0 \\ j \neq i}}^{n-1} e^t_{i,j} \qquad (6)$$

Es ist noch ein Zähler C nötig mit entier $[\ell d(n+1)]$ Binärstellen, der angibt, wieviele Elemente definiert sind; $n \in \mathbb{IN}$ sei die Anzahl der Elemente. Oft wird für n eine Zweierpotenz gewählt.

Algorithmus:

1. Rücksetzen:
Beim Rücksetzen sind die Elemente als "undefiniert" zu kennzeichnen. Der Zähler C ist auf den Wert 0 zu setzen. Die Matrixelemente sind undefiniert, können aber beliebige Werte einnehmen.
2. Elementzugriff:
Wird auf das Element $E_i$ zugegriffen, so müssen in allen Matrixelementen

$$\bigvee_{j=0}^{n-1} \vec{E}_j, \quad j \neq i$$

die Spaltenelemente gesetzt werden:

$$\bigvee_{\substack{j=0 \\ j \neq i}}^{n-1} (e^{t+1}_{j,i} := 1) \qquad (7)$$

und die Zeilenelemente des Vektors $E_i$ werden gelöscht:

4

$$\bigvee_{\substack{j = 0 \\ j \neq i}}^{n-1} (e_{i,j}^{t+1} := 0) \tag{8}$$

Der gültige Teil der Binärmatrix ist bezüglich seiner Hauptdiagonalen antisymmetrisch in seiner Wertbelegung. Alle zulässigen Operationen des Algorithmus erhalten diese Antisymmetrie.

3. Elementneubelegung bei Existenz undefinierter Elemente:

Ist der Zähler C < n, so gibt es noch (n-C) undefinierte, d. h. freie Elemente. Es werde das nächstfreie Element $E_C$ benutzt. Für die Elemente der Matrix sind die Anweisungen (7) und (8) mit i = C auszuführen. Der Zähler C ist um 1 zu inkrementieren. Die Binärmatrix wird bezüglich der Ordnung (d.h. auch im Rang der Matrix) des benutzten Matrixteiles um 1 erhöht.

4. Elementneubelegung, wenn bereits alle Elemente definiert sind.

Wenn C = n gilt, so gibt es kein undefiniertes Element mehr. Das zeitlich am längsten nicht mehr benutzte Element ist freizugeben. Der Zustandswert dieses Elements ist n-1. Dies ist das Element $E_k$, für dessen Vektor gilt:

$$\bigvee_{\substack{i = 0 \\ i \neq k}}^{n-1} (e_{k,i}^{t} = 1) \tag{9}$$

Bezüglich der Elementneubelegung sind auch hier die Anweisungen (7) und (8) auszuführen mit i = k.

Schaltungsrealisierung mit Vollmatrix für n = 4:

Nachfolgend ist die Schaltungsrealisierung exemplarisch skizziert für einen Assoziativspeicher der Tiefe n = 4.

Dieses Beispiel ist für parallelen Zugriff auf die Elemente entwickelt. Der Vorteil dieser Realisierung mit Vollmatrix ist die Modularität, d. h. jede Matrixzelle ist einem Element auch räumlich zuordenbar und muß nur installiert werden, wenn auch das zugehörige Element installiert wird. Die Schaltung kann natürlich auch derart modifiziert werden, daß seriell zugegriffen wird. Dies ist bei größeren Anwendungen eventuell gewünscht.

Schaltungsrealisierung mit Halbmatrix

Wird auf die modulare Erweiterbarkeit die Realisierung mit Vollmatrix verzichtet, so kann eine Realisierung mit einer Halbmatrix auskommen, denn es gilt:

$$\bigvee_{\substack{i,j = 1 \\ i \neq j}}^{n-1} (e_{i,j}^{t} = 1 - e_{j,i}^{t}) \quad \forall t \in \mathbb{Z} \tag{10}$$

Aus dieser Beziehung folgt: Für einen Schaltungsaufbau genügt es, die obere oder untere Dreiecksmatrix zu realisieren. Die Zustände der fehlenden Dreiecksmatrix erhält man durch die Inversausgänge der an der Hauptdiagonalen gespiegelten Zustands-Flipflops.

Aufwandsabschätzung für den LRU-Mechanismus:
(Abgeschätzt für C8000-Gate-Arrays der Firma Fujitsu)

```
Vollmatrix:                             benutzte Gatterzahl:
Matrix-FF-Elemente:        2xN2N   2n*(n-1)
Matrixzeile löschen und
Matrixspalte setzen:       1xN2P   2*2n*entier ⌈n/28⌉
Checker für älteste Zelle  1xN8B   n*(entier ⌈(n-1)/8⌉ *6+6)


Aufwand   = 2n² + 4n
                + 4n*entier ⌈n/28⌉
                + 6n*entier ⌈(n-1)/8⌉     Gatter



Halbmatrix:                             benutzte Gatterzahl:
Matrix-FF-Elemente:        2xN2N/2  n*(n-1)
Matrixzeile löschen und
Matrixspalte setzen:       1xN2P    2n*entier ⌈n/28⌉
Checker für älteste Zelle: 1xN8B    n*(entier ⌈(n-1)/8⌉ *6+6)


Aufwand   = n² + 5n
                + 2n*entier ⌈n/28⌉
                + 6n*entier ⌈(n-1)/8⌉  Gatter
```

Gatteraufwand für die beiden Realisierungen mit verschiedener Anzahl von Elementen:

| n | Vollmatrix | Halbmatrix |
|---|---|---|
| 2 | 36 | 30 |
| 4 | 88 | 68 |
| 8 | 240 | 168 |
| 16 | 832 | 560 |
| 32 | 3200 | 2080 |
| 64 | 12288 | 7872 |
| 128 | 48128 | 30592 |
| 256 | 191488 | 121088 |

Für sehr große n-Werte geht der Aufwand gegen folgende Grenzwerte

Vollmatrix:     Aufwand (n→∞) ≈ 2,9n² + 3,25n
Halbmatrix:     Aufwand (n→∞) ≈ 1,8n² + 4,25n

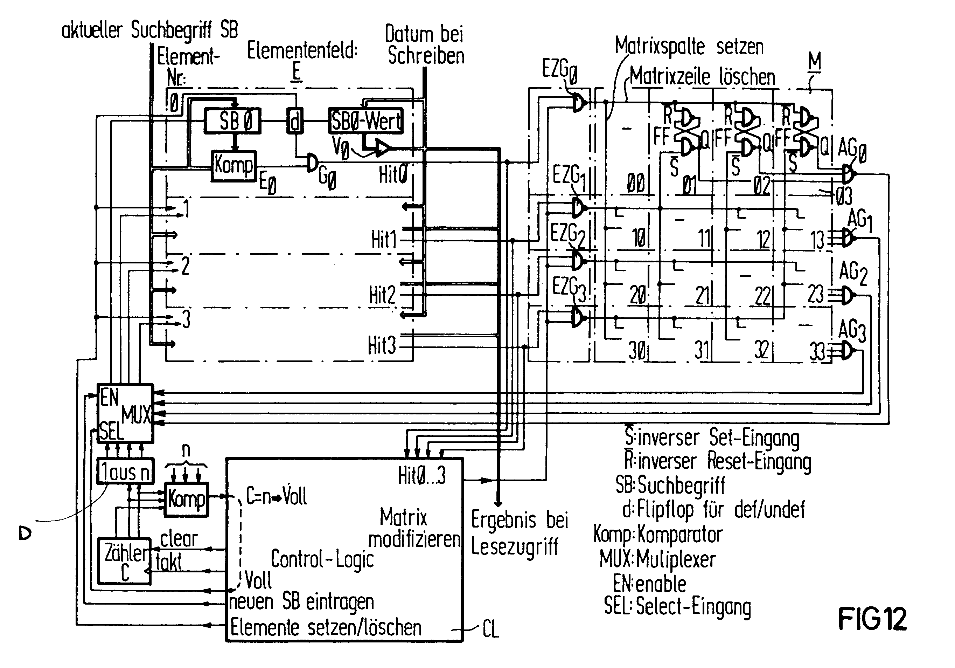

Im folgenden wird ein bevorzugtes Ausführungsbeispiel für die erfindungsgemäße Schaltungsanordnung mit einer Vollmatrix anhand von Fig. 12 beschrieben.

Die Schaltungsanordnung gemäß Fig. 12 enthält eine als Vollmatrix M ausgeführte Anordnung mit k Zeilen und m Spalten, in welcher Vollmatrix M bei jedem Kreuzungspunkt einer Zeile mit einer Spalte, ausgenommen bei denjenigen Kreuzungspunkten, die in die Hauptdiagonale der Vollmatrix M fallen, ein kreuzungspunktindividuelles Speicherelement FF vorgesehen ist, wobei alle Speicherelemente FF einen gleichen Aufbau aufweisen, und eine Steuereinrichtung S mit einer Steuerlogik CL, einem Zähler C, einem (1 aus n)-Decoder D, einem Multiplexer MUX und einem Komparator KOMP, wobei die n Elemente eingangsseitig jeweils mit einer gemeinsamen Adreß-, Anforderungs-Suchbegriffseinleitung oder dergl. und einer individuellen Ausgangsleitung des Multiplexers MUX verbunden sind wobei die n Elemente ausgangsseitig mit einem ersten Eingang eines zeilenindiviudellen Eingangsverknüpfungsgliedes EZG, das mit seinem Ausgang an eine betreffende zeilenindividuelle Matrixpaltensetz/Matrixzeilenlösch-Leitung angeschlossen ist und von dem ein zweiter Eingang gemeinsam mit allen zweiten Eingängen aller weiteren zeilenindividuellen Eingangs-Verknüpfungsglieder EZG an einen matrixseitigen Steuerausgang der Steuerlogik (CL) angeschlossen ist, verbunden sind und außerdem jeweils mit individuellen Ergebnissignaleingängen der Steuerlogik CL verbunden sind.

Die Ausgänge aller kreuzungspunktindividuellen Speicherelemente FF jeweils einer Zeile der Vollmatrix M sind mit je einem Eingang eines zeilenindividuellen Ausgangs-Verknüpfungsgliedes AZG verbunden, deren Ausgänge individuell an erste Eingänge des Multiplexers MUX angeschlossen sind, welchem Multiplexer MUX über individuelle zweite Eingänge Ausgangssignale des (1 aus n)-Decoders D sowie über einen Freigabeeingang EN und einem Auswahleingang SEL Steuersignale aus der Steuerlogik CL über entsprechende elementefeldseitige Steuerausgänge zugeführt werden. Dem Zähler C sind aus der Steuerlogik CL ein Rücksetzsignal und ein Taktsignal über entsprechende Eingänge zuführbar. Der Zähler C gibt ein binär codiertes Ausgangssignal 2" aus, das sowohl dem (1 aus n)-Decoder D als auch entsprechenden ersten Eingängen des Komparators Komp zugeführt wird. Dem Komparator Komp wird ein binär codiertes Vergleichssignal 2" zugeführt. Eine Ausgangssignalleitung des Komparators Komp mit einem entsprechenden elementefeldseitigen Signaleingang der Steuerlogik CL verbunden ist, wobei immer dann, wenn der Komparator ein vorbestimmtes Vergleichsausgangssignal ausgibt, dieses durch die Steuerlogik CL zumindest mittelbar auf den Auswahleingang SEL einwirkt.

Das Eingangsverknüpfungsglied und das Ausgangsverknüpfungsglied AZG sind jeweils vorzugsweise als NAND-Glied realisiert. Jedes Teilfeld $T_0...T_n$ weist einerseits jeweils ein erstes, eingangsseitiges Register SB, ein Speicherglied d, ein zweites ausgangsseitiges Register SB-Wert, einen Ausgangssignalverstärker V, einen eingangsseitigen Komparator KompE und ein Verknüpfungsglied G auf, wobei die n Elemente eingangsseitig mit einer Adreßleitung und einer gemeinsamen Setz-/Lösch-Leitung aus der Steuerlogik CL verbunden sind. Das Verknüpfungsglied G weist eine UND-Funktion auf.

## Patentansprüche

1. Schaltungsanordnung für Datenverarbeitungssysteme, zur Realisierung eines modular organisierten, erweiterbaren LRU (Least Recently Used)-Mechanismus für n Elemente, beispielsweise Arbeitsspeicherseiten, Zellen von Assoziativspeichern usw., in einem Datenverarbeitungssystem, wobei n > 1 ist, **gekennzeichnet** durch
    - ein Speicher für das Elementefeld (E) mit n Teilfeldern für n > 1,
    - eine als quadratische Vollmatrix (M) ausgeführte Anordnung mit n Zeilen und n Spalten, in welcher bei jedem Matrixelement mit Ausnahme der Hauptdiagonalelemente ein für dieses Matrixelement individuelles Speicherelement (FF) vorgesehen ist, wobei alle Speicherelemente (FF) einen gleichen Aufbau aufweisen und wobei die Summe der Inhalte der Speicherelemente einer Zeile i dem Zustand $Z_i^t$ des Elements $E_i$ zum Zeitpunkt t entspricht, und
    - eine Steuereinrichtung (S) mit einer Steuerlogik (CL), einem Zähler (C), einem (1 aus n)-Decoder (D), einem Multiplexer (MUX) und einem Komparator (KOMP), wobei die n Teilfelder in dem Speicher für das Elemente feld eingangsseitig jeweils mit einer gemeinsamen Adreß-, Anforderungs-Suchbegriffsleitung oder dergl. und einer individuellen Ausgangsleitung des Multiplexers (MUX) verbunden sind und wobei die HIT-Signalleitung jedes der n Teilfelder ausgangsseitig mit einem ersten Eingang eines zeilenindividuellen Eingangsverknüpfungsgliedes (EZG) verbunden ist, das mit seinem Ausgang an eine betreffende zeilenindividuelle Matrixspaltensetz/Matrixzeilenlösch-Leitung angeschlossen ist und von dem ein zweiter Eingang gemeinsam mit allen zweiten Eingängen aller weiteren zeilenindividuellen Eingangs-Verknüpfungsglieder (EZG) an einen matrixseitigen Steuerausgang der Steuerlogik (CL) angeschlossen ist, und wobei die n HIT-Signalleitungen jeweils mit individuellen Ergebnissignaleingängen der Steuerlogik (CL) verbunden sind, und gekennzeichnet dadurch, daß

die Ausgänge aller Speicherelemente (FF) jeweils einer Zeile der Vollmatrix (M) mit je einem Eingang eines zeilenindividuellen Ausgangs-Verknüpfungsgliedes (AZG) verbunden sind, deren Ausgänge individuell an erste Eingänge des Multiplexers (MUX) angeschlossen sind, welchem Multiplexer (MUX) über individuelle zweite Eingänge Ausgangssignale des (1 aus n)-Decoders (D) sowie über einen Freigabeeingang (EN) und einem Auswahleingang (SEL) Steuersignale aus der Steuerlogik (CL) über entsprechende elementefeldseitige Steuerausgänge zugeführt werden, und

- daß dem Zähler (C) die Zahl von undefinierten Elementen E andeutet, und
- daß dem Zähler (C) aus der Steuerlogik (CL) ein Rücksetzsignal und ein Taktsignal über entsprechende Eingänge zuführbar sind, und
- daß der Zähler (C) ein binär codiertes Ausgangssignal ($2^n$) ausgibt, das sowohl dem (1 aus n)-Decoder (D) als auch entsprechenden ersten Eingängen des Komparators (KOMP) zugeführt wird, und
- daß dem Komparator (KOMP) ein binär codiertes Vergleichssignal ($2^n$) zugeführt wird und
- daß eine Ausgangssignalleitung des Komparators (KOMP) mit einem entsprechenden elementefeldseitigen Signaleingang der Steuerlogik (CL) verbunden ist, wobei immer dann, wenn der Komparator ein vorbestimmtes Vergleichsausgangssignal ausgibt, dieses durch die Steuerlogik (CL) zumindest mittelbar auf den Auswahleingang (SEL) einwirkt, wobei das Element $E_k$ ausgelagert wird, wofür der Zustand $Z_k^t$ gleich (n-1) ist.

2. Schaltungsanordnung nach Anspruch 1, dadurch **gekennzeichnet,** daß das Eingangsverknüpfungsglied (EZG) ein NAND-Glied ist.

3. Schaltungsanordnung nach Anspruch 1 oder 2, dadurch **gekennzeichnet,** daß das Ausgangs-Verknüpfungsglied (AZG) ein NAND-Glied ist.

4. Schaltungsanordnung nach einem der vorhergehenden Ansprüche, dadurch **gekennzeichnet,** daß jedes Teilfeld ($T_0...T_n$) des Speichers für das Elemente feld seinerseits jeweils ein erstes, eingangsseitiges Register (SB), ein Speicherglied (d), ein zweites ausgangsseitiges Register (SB-Wert), einen Ausgangssignalverstärker (V), einen eingangsseitigen Komparator (KompE) und ein Verknüpfungsglied (G) aufweist, wobei die n Elemente eingangsseitig mit einer Adreßleitung und einer gemeinsamen Setz-/Lösch-Leitung aus der Steuerlogik (CL) verbunden sind.

5. Schaltungsanordnung nach Anspruch 4, dadurch **gekennzeichnet,** daß das Verknüpfungsglied (G) des Elemente-Feldes (E) ein UND-Glied ist.

## Claims

1. Circuit arrangement for data processing systems for realising a modularly organised, expandable LRU (Least Recently Used) mechanism for n elements, for example main memory pages, cells of associative memories, etc., in a data processing system, where n > 1, characterised by
   - a memory for the element field (E) having n subfields for n > 1,
   - an arrangement taking the form of a square full matrix (M) having n rows and n columns, in which, for each matrix element with the exception of the main diagonal elements, an individual storage element (FF) is provided for said matrix element, in which all storage elements (FF) have the same structure, and in which the total of the contents of the storage elements of a row i corresponds to the status $Z_i^t$ of the element $E_i$ at the time t, and
   - a control device (S) with a control logic means (CL), a counter (C), a (1-from-n) decoder (D), a multiplexer (MUX) and a comparator (KOMP), in which the n subfields in the memory for the element field are connected on the input side in each case to a common address search term line, request search term line, or the like, and to an individual output line of the multiplexer (MUX), and in which the HIT signal line of each of the n subfields is connected on the output side to a first input of a row-specific input gating element (EZG), which is connected with its output to a respective row-specific matrix column set/matrix row erase line, and a second input of which is connected together with all second inputs of all further row-specific input gating elements (EZG) to a control output of the control logic means (CL) on the matrix side, and in which the n HIT signal lines are connected in each case to individual result signal inputs of the control logic means (CL), and characterised in that

- the outputs of all storage elements (FF) of one row of the full matrix (M) in each case are connected to one input of a row-specific output gating element (AZG) in each case, the outputs of which are connected individually to first inputs of the multiplexer (MUX), to which multiplexer (MUX) output signals of the (1-from-n) decoder (D) are supplied via individual second inputs, and to which control signals from the control logic means (CL) are also supplied via an enable input (EN) and a select input (SEL) via corresponding control outputs on the element field side, and
- in that the counter (C) indicates the number of undefined elements E, and
- in that a reset signal and a clock signal can be supplied to the counter (C) from the control logic means (CL) via corresponding inputs, and
- in that the counter (C) outputs a binary coded output signal ($2^n$) which is supplied both to the (1-from-n) decoder (D) and to corresponding first inputs of the comparator (KOMP), and
- in that a binary coded compare signal ($2^n$) is supplied to the comparator (KOMP), and
- in that an output signal line of the comparator (KOMP) is connected to a corresponding signal input of the control logic means (CL) on the element field side, in which, whenever the comparator outputs a predetermined compare output signal, the latter influences the select input (SEL) at least indirectly via the control logic means (CL), the element $E_k$ being swapped out, for which purpose the status $Z_k^t$ is equal to (n-1).

2. Circuit arrangement according to Claim 1, characterised in that the input gating element (EZG) is a NAND element.

3. Circuit arrangement according to Claim 1 or 2, characterised in that the output gating element (AZG) is a NAND element.

4. Circuit arrangement according to one of the preceding claims, characterised in that each subfield ($T_0...T_n$) of the memory for the element field has in each case a first register (SB) on the input side, a storage element (d), a second register (SB-value) on the output side, an output signal amplifier (V), a comparator (KompE) on the input side, and a gating element (G), in which the n elements are connected on the input side to an address line and a common set/erase line from the control logic means (CL).

5. Circuit arrangement according to Claim 4, characterised in that the gating element (G) of the element field (E) is an AND element.

**Revendications**

1. Montage pour des systèmes de traitement de données, pour la réalisation d'un mécanisme LRU (Least Recently Used) extensible, organisé de façon modulaire, pour n éléments, par exemple des pages de mémoires de travail, des cellules de mémoires associatives, etc., dans un système de traitement de données, avec n > 1, caractérisé par
   - une mémoire pour le champ d'éléments (E) comportant n zones partielles pour n > 1,
   - un dispositif agencé sous la forme d'une matrice complète carrée (M) comportant n lignes et n colonnes et dans laquelle, pour chaque élément de matrice, à l'exception des éléments de la diagonale principale, il est prévu un élément de mémoire (FF) individuel pour cet élément de matrice, tous les éléments de mémoire (FF) possédant une même contitution et la somme des contenus des éléments de mémoire d'une ligne i correspondant à l'état $Z_i^t$ de l'élément $E_i$ à l'instant t, et
   - un dispositif de commande (S) possédant une unité logique de commande (CL), un compteur (C), un décodeur (1-parmi-n) (D), un multiplexeur (MUX) et un comparateur (KOMP), les n zones partielles situées dans la mémoire pour le champ d'éléments étant raccordées, côté entrée, respectivement à un conducteur commun de recherche d'adresses et de demandes ou analogue et à un conducteur individuel de sortie du multiplexeur (MUX), et le conducteur de transmission de signaux HIT de chacune des n zones partielles étant raccordé, côté sortie, à une première entrée d'un élément combinatoire d'entrée (EZG) prévu pour chaque ligne et qui est raccordé, par sa sortie, à un conducteur associé, prévu pour chaque ligne, de positionnement des colonnes de la matrice/d'extinction des lignes de la matrice, et dont une seconde entrée est raccordée en commun à toutes les secondes entrées de tous les autres circuits combinatoires d'entrée (EZG), prévus individuellement pour les lignes, au niveau d'une sortie de commande, située côté matrice, de l'unité logique de commande (CL), et les n conducteurs de signaux HIT étant raccordés respectivement à des entrées individuelles de signaux de résultat de l'unité logique de commande (CL),

et caractérisé en ce que

les sorties de tous les éléments de mémoire (FF) d'une ligne respective de la matrice complète (M) sont raccordées respectivement à une entrée d'un circuit combinatoire de sortie (EZG) prévu individuellement pour une ligne, dont les sorties sont raccordées individuellement à des premières entrées du multiplexeur (MUX), lequel multiplexeur (MUX) reçoit, par l'intermédiaire de secondes entrées individuelles, des signaux de sortie du décodeur (1-parmi-n) (D) ainsi que, par l'intermédiaire d'une entrée de libération (EN) et d'une entrée de sélection (SEL), des sections de commande à partir d'une unité logique de commande (CL), par l'intermédiaire de sorties correspondantes de commande, qui sont situées du côté du champ d'éléments, et

- que le compteur (C) indique le nombre d'éléments E indéfinis,
- qu'un signal de remise à zéro et un signal de cadence peuvent être envoyés au compteur (C) à partir de l'unité logique de commande (CL) par l'intermédiaire d'entrées correspondantes, et
- que le compteur (C) délivre un signal de sortie codé en binaire ($2^n$), qui est envoyé aussi bien au décodeur (1-parmi-n) (D) ainsi qu'à des premières entrées correspondantes du comparateur (KOMP), et
- qu'un signal de comparaison ($2^n$) codé en binaire est envoyé au comparateur (KOMP), et
- qu'un conducteur de transmission de signaux de sortie du comparateur (KOMP) est raccordé à une entrée correspondante des signaux, situés du côté du champ d'éléments, de l'unité logique de commande (CL), auquel cas chaque fois que le comparateur délivre un signal prédéterminé de sortie de comparaison, ce signal agit au moins de façon indirecte, par l'intermédiaire de l'unité logique de commande (CL), sur l'entrée de sélection (SEL), l'élément ($E_k$) étant agencé de manière que l'état $Z_k^t$ soit égal à (n-1).

2. Montage suivant la revendication 1, caractérisé par le fait que le circuit combinatoire d'entrée (EZG) est un circuit NON-ET.

3. Montage suivant la revendication 1 ou 2, caractérisé par le fait que le circuit combinatoire de sortie (AZG) est un circuit NON-ET.

4. Montage suivant l'une des revendications précédentes, caractérisé par le fait que chaque zone partielle ($T_0...T_n$) de la mémoire pour le champ d'éléments comporte pour sa part un premier registre (SB) situé côté entrée, un circuit de mémoire (d), un second registre situé côté sortie (valeur SB), un amplificateur (V) des signaux de sortie, un comparateur (KompE) situé côté entrée et un circuit combinatoire (G), les n éléments étant raccordés, côté entrée, au conducteur de transmission d'adresses et à un conducteur commun de positionnement/effacement partant de l'unité logique de commande (CL).

5. Montage suivant la revendication 4, caractérisé par le fait que le circuit combinatoire (G) du champ d'éléments (E) est un circuit ET.

# FIG 1

Legende:  /// = undefinierter  Suchbegriff

//// = undefinierter  Elementwert

xxxx = Wert des Elementes "x"

u = undefiniert

d = definiert

c = Zähler

⇐,⬆ = Zeile,Spalte mit wichtiger Änderung

←,↑ = Zeile,Spalte ändert sich

= relevante Teilmatrix oben links,
gekennzeichnet durch Doppelrahmen

# FIG 2

1. Im dynamischen Ablauf werde zunächst rückgesetzt:

C:=0      Elementenfeld:                          LRU-Matrix:

| Element: | Suchbe-griff: | def/undef: | Wert: |
|----------|------|------|------|
| 0 | /// | u | //// |
| 1 | /// | u | //// |
| 2 | /// | u | //// |
| 3 | /// | u | //// |

| Element: | 0 | 1 | 2 | 3 | Zustand: |
|----------|---|---|---|---|----------|
| 0 | – | u | u | u | u |
| 1 | u | – | u | u | u |
| 2 | u | u | – | u | u |
| 3 | u | u | u | – | u |

# FIG 3

2. Eintragen Element "a":

C:=1      Suchbe-  def/  Wert:

| Element: | griff: | undef: | Wert: |
|----------|------|------|------|
| ⇒ 0 | "a" | d | aaaa |
| 1 | /// | u | //// |
| 2 | /// | u | //// |
| 3 | /// | u | //// |

| Element: | 0 | 1 | 2 | 3 | Zustand: |
|----------|---|---|---|---|----------|
| 0 | – | 0 | 0 | 0 | 0 ⇐ |
| 1 | 1 | – | u | u | u |
| 2 | 1 | u | – | u | u |
| 3 | 1 | u | u | – | u |

⇑

# FIG 4

3.Eintragen Element "b":

C:=2

| Element: | Suchbegriff: | def/undef: | Wert: |
|---|---|---|---|
| 0 | "a" | d | aaaa |
| ⇒ 1 | "b" | d | bbbb |
| 2 | /// | u | //// |
| 3 | /// | u | //// |

| Element: | 0 | 1 | 2 | 3 | Zustand: |
|---|---|---|---|---|---|
| 0 | - | 1 | 0 | 0 | 1 ← |
| 1 | 0 | - | 0 | 0 | 0 ⇐ |
| 2 | 1 | 1 | - | u | u |
| 3 | 1 | 1 | u | - | u |

↑ ⇑

# FIG 5

4.Zugriff auf Element "a":

C:=2

| Element: | Suchbegriff: | def/undef: | Wert: |
|---|---|---|---|
| 0 | "a" | d | aaaa |
| 1 | "b" | d | bbbb |
| 2 | /// | u | //// |
| 3 | /// | u | //// |

| Element: | 0 | 1 | 2 | 3 | Zustand: |
|---|---|---|---|---|---|
| 0 | - | 0 | 0 | 0 | 0 ⇐ |
| 1 | 1 | - | 0 | 0 | 1 ← |
| 2 | 1 | 1 | - | u | u |
| 3 | 1 | 1 | u | - | u |

⇑ ↑

# FIG 6

5.Eintragen Element "c":

C:=3

| Element: | Suchbegriff: | def/undef: | Wert: |
|---|---|---|---|
| 0 | "a" | d | aaaa |
| 1 | "b" | d | bbbb |
| ⇒ 2 | "c" | d | cccc |
| 3 | /// | u | //// |

| Element: | 0 | 1 | 2 | 3 | Zustand: |
|---|---|---|---|---|---|
| 0 | - | 0 | 1 | 0 | 1 ← |
| 1 | 1 | - | 1 | 0 | 2 ← |
| 2 | 0 | 0 | - | 0 | 0 ⇐ |
| 3 | 1 | 1 | 1 | - | u |

↑ ↑ ⇑

# FIG 7

6. Eintragen Element "d":

C := 4

| Element: | Suchbegriff: | def/undef: | Wert: |
|---|---|---|---|
| 0 | "a" | d | aaaa |
| 1 | "b" | d | bbbb |
| 2 | "c" | d | cccc |
| ⇒ 3 | "d" | d | dddd |

| Element: | 0 | 1 | 2 | 3 | Zustand: |
|---|---|---|---|---|---|
| 0 | − | 0 | 1 | 1 | 2 ← |
| 1 | 1 | − | 1 | 1 | 3 ← |
| 2 | 0 | 0 | − | 1 | 1 ← |
| 3 | 0 | 0 | 0 | − | 0 ← |
| | ↑ | ↑ | ↑ | ⇑ | |

# FIG 8

7. Zugriff auf Element "a":

C := 4

| Element: | Suchbegriff: | def/undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | − | 0 | 0 | 0 | 0 ← |
| 1 | 1 | − | 1 | 1 | 3 |
| 2 | 1 | 0 | − | 1 | 2 ← |
| 3 | 1 | 0 | 0 | − | 1 ← |
| | ⇑ | | ↑ | ↑ | |

# FIG 9

8. Zugriff auf Element "c":

C := 4

| Element: | Suchbegriff: | def/undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | − | 0 | 1 | 0 | 1 ← |
| 1 | 1 | − | 1 | 1 | 3 |
| 2 | 0 | 0 | − | 0 | 0 ← |
| 3 | 1 | 0 | 1 | − | 2 ← |
| | ↑ | | ⇑ | ↑ | |

# FIG 10

9. Zugriff auf Element "a":

C := 4

| Element: | Suchbe-<br>griff: | def/<br>undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | – | 0 | 0 | 0 | 0 ← |
| 1 | 1 | – | 1 | 1 | (3) |
| 2 | 1 | 0 | – | 0 | 1 ← |
| 3 | 1 | 0 | 1 | – | 2 |

ältestes Element

# FIG 11

10. Eintragen Element "e" (Element "b" wird überschrieben):

C := 4

| Element: | Suchbe-<br>griff: | def/<br>undef: | Wert: |
|---|---|---|---|
| 0 | "a" | d | aaaa |
| ⇒ 1 | "e" | d | eeee |
| 2 | "c" | d | cccc |
| 3 | "d" | d | dddd |

| Element: | 0 | 1 | 2 | 3 | Zustand: |
|---|---|---|---|---|---|
| 0 | – | 1 | 0 | 0 | 1 ← |
| 1 | 0 | – | 0 | 0 | 0 ⇐ |
| 2 | 1 | 1 | – | 0 | 2 ← |
| 3 | 1 | 1 | 1 | – | 3 ← |

FIG 12

S: inverser Set-Eingang
R: inverser Reset-Eingang
SB: Suchbegriff
d: Flipflop für def/undef
Komp: Komparator
MUX: Muliplexer
EN: enable
SEL: Select-Eingang

EP 0 309 667 B1